(19) Europäisches Patentamt
European Patent Office
Office européen des brevets

(11) **EP 2 480 785 B1**

(12) **EUROPEAN PATENT SPECIFICATION**

(45) Date of publication and mention
of the grant of the patent:
**10.06.2015 Bulletin 2015/24**

(51) Int Cl.:
*F03B 13/00* *(2006.01)*        *F03B 13/26* *(2006.01)*
*F03B 17/00* *(2006.01)*        *F03B 17/06* *(2006.01)*

(21) Application number: **09849878.5**

(86) International application number:
**PCT/NO2009/000332**

(22) Date of filing: **23.09.2009**

(87) International publication number:
**WO 2011/037471 (31.03.2011 Gazette 2011/13)**

(54) **CONVERTING KINETIC ENERGY USING A HYDROFOIL**

UMWANDLUNG VON KINETISCHER ENERGIE MIT EINER TRAGFLÄCHE

CONVERSION DE L'ÉNERGIE CINÉTIQUE À L'AIDE D'UN PLAN HYDRODYNAMIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(43) Date of publication of application:
**01.08.2012 Bulletin 2012/31**

(73) Proprietor: **Engervik Technology AS**
**4623 Kristiansand (NO)**

(72) Inventor: **ENGERVIK, Terje**
**N-4623 Kristiansand (NO)**

(74) Representative: **Tafjord, Harald**
**Bryn Aarflot AS**
**P.O. Box 449 Sentrum**
**0104 Oslo (NO)**

(56) References cited:
**WO-A2-94/21914        NO-A- 20 084 028**
**NO-B1- 326 942         US-A1- 2007 040 389**
**US-B1- 6 273 680**

## Description

## BACKGROUND

### Field of the invention

The present invention concerns a method and apparatus for converting kinetic energy in a flow of liquid using a hydrofoil. In a preferred embodiment, a cyclic vertical movement of the hydrofoil is used to repeatedly compress air and release the pressurized air at or near the surface.

### Prior art

One of today's major challenges is to provide renewable energy inexpensive enough to compete with fossil fuels and other non-renewable energy sources.

The invention aims to convert the kinetic energy in a natural flow of liquid, in particular water, to a usable form. These natural flows of liquid may include rivers, streams, tidal currents, ocean currents or any other flow of liquid, in particular water.

As a first example, the Earth's ocean currents comprise enormous amounts of kinetic energy. There are two ocean currents in the world having a velocity over 3 knots, the Gulf Stream and the Kuroshio. The Gulf Stream conveys water at a rate between 30 000 000 m³/sec (30 Sv) and 80 000 000 m³/sec (80 Sv). The velocity of the Gulf Stream varies with topographical conditions. The Gulf Stream is up to 200 km wide, whereas the core, wherein velocities above 2m/s (5 knots) occur, is 90km wide.

The Gulf Stream has small seasonal fluctuations, which means that the energy is constant throughout the year. The Gulf Stream is driven by the Coriolis-effect caused by the Earth's rotation.

The Gulf Stream reaches its highest velocity off Florida, with a peak velocity of 7.75 mph (6.73knots) at the centre. The current also has a depth from 300 meters to about 1200 meters.

The amount of energy in water in motion is of course higher than in air, as water has a density of 860 times that of air.

Some prior techniques are based on inserting some form of rotating wheels, e.g. propellers or turbine vanes, driving a generator into a tidal stream, a river etc to convert the kinetic energy of the of the rotor to electric current and voltage. There are several mechanical solutions for retaining such rotating wheels, propellers or rotor blades in a sea current. Common means include a frame mounted on the seabed or a mooring via an anchor line to the sea bed, often with a ballast in order to stabilize the generator in the water/flow.

There is a limitation in the amount of energy that can be converted by such methods. The limitation is due to the area of the propeller blades or rotor blades, as the area is directly proportional to the energy generated. The area of a propeller blade is provided by the expression:

$$A = z \int c(r) dr$$

Z = number of blades
C(r) = chord

The power (KE) obtainable from the flow of liquid increases with velocity and area, thus:

$$KE = \frac{1}{2} a * \rho * U^3$$

a = Area
$\rho$ = density
U = velocity

Hence, to collect more kinetic energy from the flow of liquid, the area of the propeller or turbine must increase. This also increases the forces on the equipment and mooring. To avoid too large forces on the equipment, the energy to be converted is limited. As is apparent from the above, these methods of prior art still faces major challenges in generating sufficient amounts of energy. Use of wheels, rotor blades, or propellers generates too little energy with regard to the market requirements, and with regard to the cost/benefit ratio.

These disadvantages may be overcome by using a wing or foil rather than a propeller or turbine.

NO 326942 discloses an apparatus for energy from a flow of water, preferably for production of electrical current. The apparatus comprises at least one wing or hydrofoil. The hydrofoil is movable mounted in a supporting structure for reciprocating motion between a first and second turning point. Turning devices assist in changing the angle of attack of the hydrofoil with respect to the direction of fluid flow.

US 6 273 680 shows an apparatus for converting the kinetic energy in a fluid flow tu usable energy by means of a plurality of thin foils (aero- or hydrofoils) disposed in the flow. Barriers may be positioned around the apparatus for increasing efficiency by increasing the fluid velocity. A system of flywheels is used to increase inertia of the foils. The cascade of foils may be mechanically oscillated to transfer energy to a fluid.

WO 94/21914A2 shows a flow body in the shape of an adjustable wing. The profile and volume of the wing can be adjusted.

US 2007/040389 discloses an apparatus and a method corresponding to the preamble of independent claims 1, 5 and 8.

Further, the prior art methods generally disclose methods for generating electricity. Thus, the challenge of making the energy conveyable (energy carrier) with a least possible loss of efficiency remains, not in the least considering the limited amount of energy obtained from the prior art methods. By converting to energy carriers such as, for example, batteries or hydrogen by known methods, energy loss is suffered at each conversion.

An objective of the present invention is thus to provide renewable alternatives providing a sufficient amount of energy to be able to replace the present consumption of fossil fuels.

Another object is to convey generated renewable energy to the consumer without losing substantial amounts of energy by one or more transformations and reloads during transport.

SUMMARY OF THE INVENTION

This is achieved according to claim 1 by providing a method for converting kinetic energy in a flow of liquid, wherein a foil is disposed in the flow of liquid such that the foil can be moved cyclically in directions perpendicular to the flow of liquid between an uppermost level and a lowermost level depending on the lift of the foil, which method comprises the steps of:

- confining a compressible fluid in a pressure tank attached to the foil at a first pressure when the foil is at the uppermost level,
- controlling the lift of the foil such that the foil is subjected to a force in a downward direction,
- allowing the compressible fluid to compress as long as the foil is moving downwards,
- confining the compressed fluid in the pressure tank at a second pressure when the foil is at the lowermost level,
- controlling the lift of the foil such that the foil is subjected to a force in an upward direction,
- preventing the compressible fluid from expanding while the foil is moving in an upward direction, and
- removing the potential energy of the compressed fluid from the pressure tank when the foil is at the uppermost level.

The invention also comprises an apparatus for carrying out the method.

In a preferred embodiment, air is compressed and later expanded. The compression process occurs when air is confined in a hydrofoil, which in turn is submerged in a liquid, preferably moving water, wherein the kinetic energy in the flow of water is employed for submersion and rising of the hydrofoil. The air is compressed naturally during submersion, and is trapped in a compressed volume before rising.

As is apparent from the above, the energy is represented by the motion of mass present in ocean currents, that is in clean and renewable form. This energy is stable throughout the year, and is present in amounts sufficiently large to cover the global energy needs.

Other features related to the invention will be apparent from the enclosed set of claims.

The invention thus implies that the environmental balance sheet is substantially improved in comparison to prior art methods by the substantially larger volume of energy that can be generated by the invention.

BRIEF DESCRIPTION OF THE DRAWINGS

The invention will be explained in greater detail with reference to the accompanying drawings, wherein:

Fig. 1 is a schematic view of a wing or hydrofoil having at least one pressure tank during a cycle of compression and surfacing with pressurized air.

Fig. 2 is a schematic view illustrating how angle of attack is used to provide positive or negative lift.

Fig. 3 illustrates the use of tension bars

Fig. 4 illustrates the additional use of a wire and pulleys to create a rotation, which in turn can be converted to electrical energy.

Fig. 5 shows a generic wing

Fig 6a-c are schematic views of a pressure tank at different stages of the cyclic motion of the wing.

DETAILED DESCRIPTION OF A PREFERRED EMBODIMENT

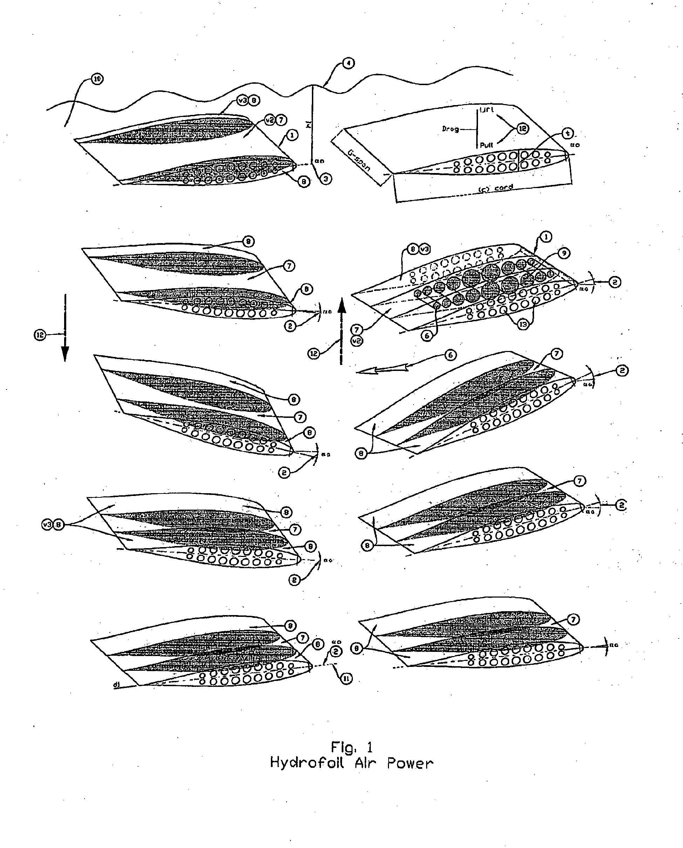

Figure 1 illustrates the method, and shows a hydrofoil (1) disposed in a liquid (10) having a flow (6). Gas, advantageously an air volume (7) is disposed advantageously within the hydrofoil (1). The volume of the air is adjusted to the down force (12) of the hydrofoil, such that the down force becomes greater than the buoyancy caused by the gas volume. The angles of attack (2) are adjusted to provide a down force and a downward motion. Hence, the hydrofoil (1) becomes submerged, and the air volume is compressed relative to the instantaneous depth of the hydrofoil (1), to volume $V_2$ (7). This happens when the end walls (9) are pushed inwards by the surrounding liquid pressure. The volume $V_2$ is replaced by surrounding water entering through openings (13). The volume (8) $V_3$ expands proportional to depth. The deeper the hydrofoil is brought, the higher the pressure it is exposed to, which causes $V_2$ to decrease correspondingly.

An accelerating effect is achieved by that the volume of air decreases inversely proportional to the increasing depth to which it is subject.

When the foil has arrived at the intended depth (d1) (11), the angle of attack is altered such that the hydrofoil gets a lift and rises. The walls (9) of the foil volume $V_2$ (7) are locked by a mechanical device, which means that the compressed pressure in the air is kept, as the volume does not expand because of the locking. Hence, during rising the air becomes an energy carrier.

The hydrofoil eventually rises towards the surface (4). Once the hydrofoil has arrived at the surface (4) or a predetermined depth $(h_1)(3)$, the pressure tank $V_2$ (7) is advantageously connected to conduits and/or pipes that convey the pressurized air to containers for transport or to a pipeline for later use of the energy.

By locating a hydrofoil as described above and illustrated in figure 1 within a flow of liquid, either a lift or a down force can be created by adjusting the angle of attack by the foil itself, by flaps, or support, or by design of the foil shape. The design is illustrated in the accompanying drawings and examples as a symmetrical hydrofoil shape, although it is not a prerequisite that the foil is symmetrical. An asymmetrical foil can also be used. The shape of the hydrofoil would depend on the concrete application.

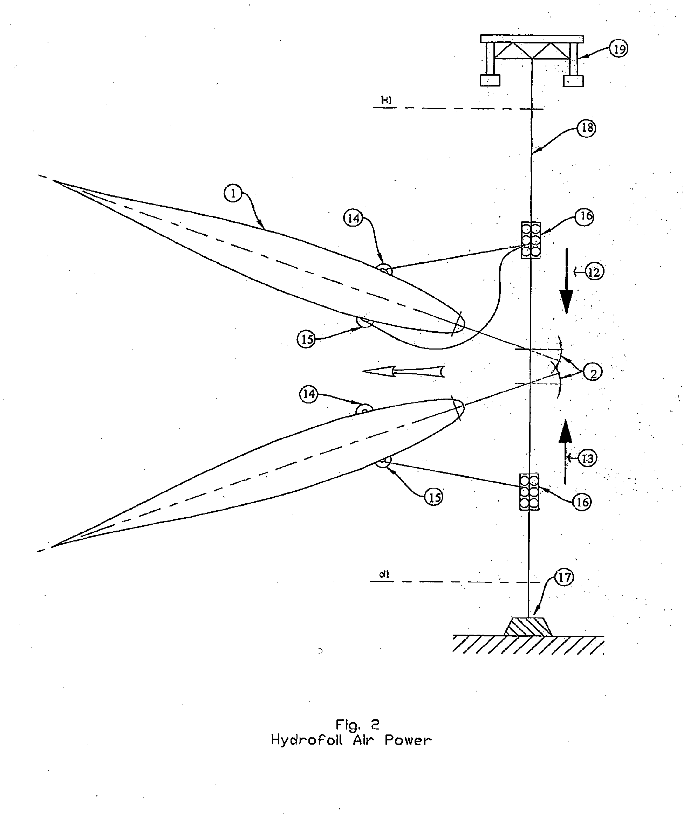

Figures 2-4 illustrates the preferred embodiment.

Several different alternative mechanical devices may be applied to provide the path of the hydrofoil in the cycle of submersion and surfacing, such as a framework, tension bars, anchors/mooring or the like. Connection to the device is designed such that it can adjust the hydrofoil's angle of attack relative to the flow of liquid.

Figure 2 shows a tension bar (18) which is connected to a surface platform (19) and anchored in the sea bed (17). At a retaining point (14) on the upper face of the hydrofoil (1) (down force) and alternately on the lower face (15) (lift), the angle of attack (2) is altered such that the cycle of submersion and rising can be performed. Attachment to the tension bar (18) is implemented by a glider (16). The cycle starts at retainer in (14). Once the hydrofoil has arrived to a predetermined depth (d1), the retainer (14) is released, advantageously by means of a pressure activated quick release coupling. The retainer in (15) takes over, and the angle of attack is altered such that a lift, and hence a rising cycle, is started. Once the hydrofoil arrives at the top of the cycle (surface or near surface), (h1) and the pressurized air is unloaded, the wire is once more connected to retainer (14) and a new downpull cycle starts.

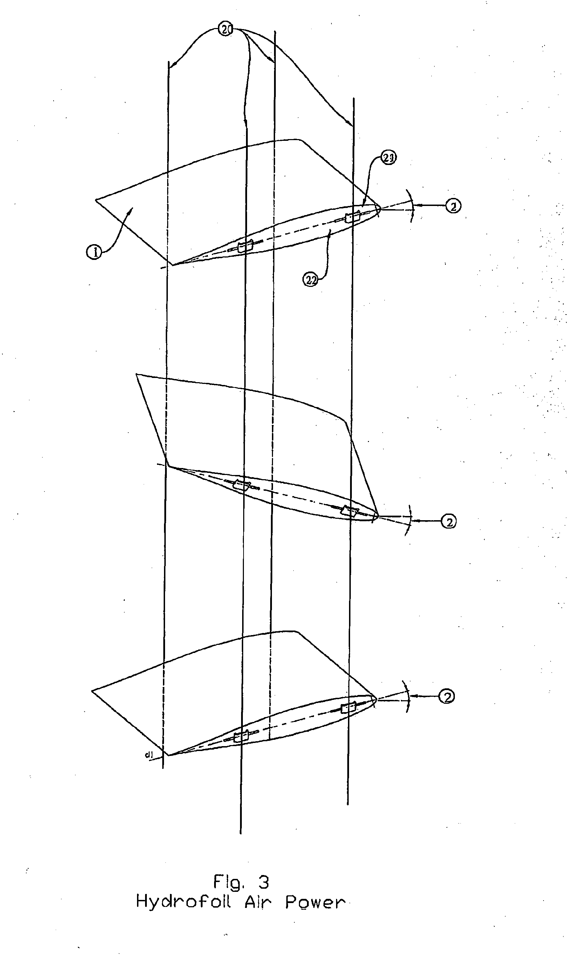

Figure 3 shows an example of several tension bars (20) which are connected to a surface platform and anchored in the sea bed. The hydrofoil is connected to the tension bar (20) by retaining means (21) adjustable on the tension bar and a groove in the foil (22). The retaining devices are designed such that the angle of attack (2) of the hydrofoil in the flow can be adjusted.

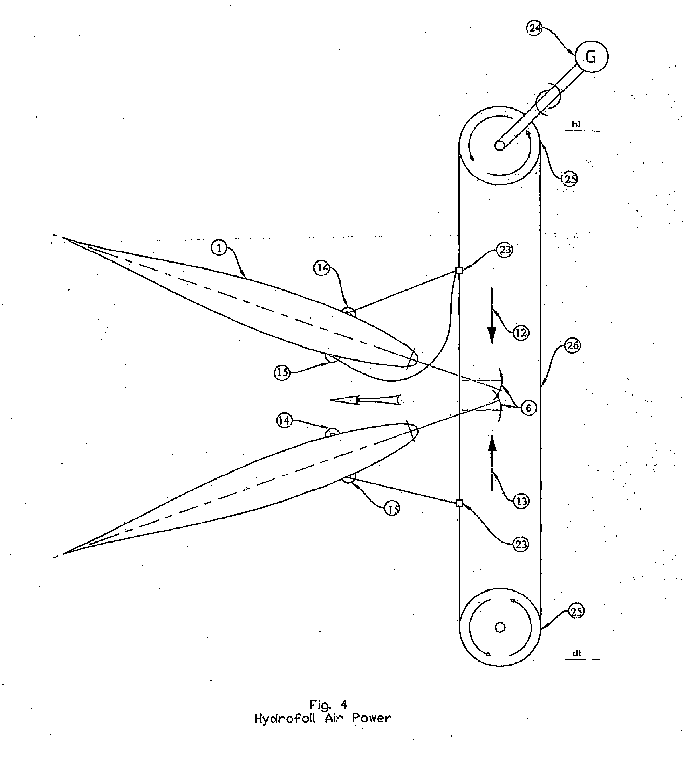

In fig. 4 is shown an example on a tensioned string (26) anchored in a liquid similar to the previous description. At a retaining point (14) on one side of the hydrofoil (1), and alternately on the other side (15), the angle of attack (2) is altered such that the cycle of submersion (12) and rising (13) can be performed. Attachment to the string (26) is fixed by the retainer (23). By the connection (23) the path (26) will rotate around the pulleys (25) and provide kinetic energy. This kinetic energy is collected by devices (24), which may be electric generators, compressors or other known energy utilization methods. By this embodiment energy may be collected as previously described.

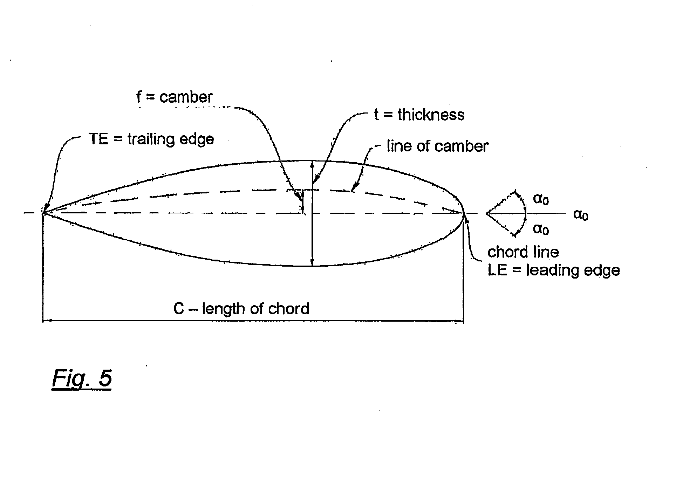

Figure 5 illustrates the elements of a generic wing. As an alternative to adjusting the angle of attack, the profile of the wing might be altered to achieve the required lift and down force.

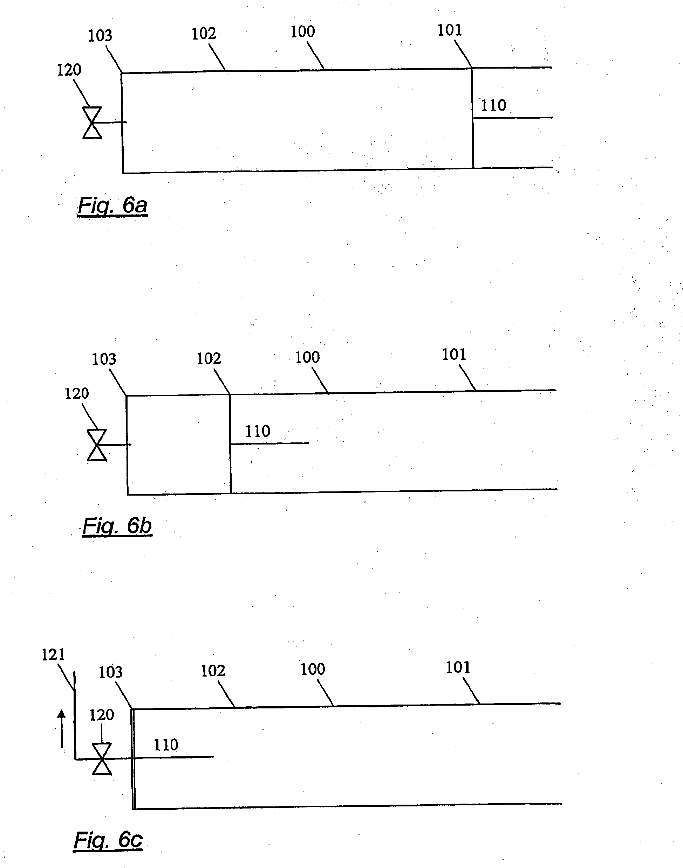

Figure 6a is a schematic view of a pressure tank comprising a housing (100) and a piston (110). The piston (110) is slidably mounted in the housing (100), and sealed against the inner surface of the housing (100). Figure 6a illustrates a situation where the volume defines by the inner surface, the piston (110) and an end wall (103) of the housing is filled with a compressible fluid, e.g. air, and the piston is as far from the end wall (103) as possible. This corresponds to the situation where the hydrofoil is at its uppermost position (h1). The housing has a valve (120) and an inlet through which the compressible fluid can be supplied. In Fig 6a it is assumed that the tubing for supply of compressible fluid is removed, and that the valve (120) is closed.

The piston (110) is exposed to the ambient pressure. As the pressure increases, the piston (110) moves towards the end wall (103), keeping equilibrium between the ambient pressure and the pressure of the compressible fluid.

Figure 6b illustrates the situation corresponding to the hydrofoil being at its lowermost or deepest position (d1). The piston (110) is at a position (102) wherein locking means prevents the piston (102) from retracting (and the pressurized fluid from expanding) when the hydrofoil starts rising towards the surface.

In figure 6c, it is assumed that the hydrofoil once more is at its uppermost position (h1), and that tubing (121) is connected to the valve (120). The valve (120) is opened, and the piston (110) can be moved further towards the end wall (103) for evacuation of the pressurized fluid through the open valve (120) and tubing (121).

The tubing (121) can later be used to provide new compressible medium, e.g. fresh air, before the tubing (121) is removed and valve (120) is closed as shown in Fig. 6a, thus starting a new cycle.

Utilization of additional energy

In addition to that the down force is utilized to compress the air as described above, the same motion may be utilized to extract additional power by adjusting the supportive device for the motion path of the hydrofoil.

If the hydrofoil is attached to a string, advantageously a wire, this can be wound around pulleys attached to a mooring apparatus in the depth of the liquid and in a floating or submerged surface platform respectively. Rotation of the pulleys creates a work. The work in the pulley at the surface of the liquid is transferred via a transmission unit, e.g. a shaft, to an energy utilizing device, e.g. a compressor or a generator.

During submersion of the hydrofoil the air volume will decrease, as noted above, proportional to the depth. By the steadily decreasing volume, the buoyancy will decrease correspondingly. The down force will be constant, leading to an increased velocity. This implies that more load can be applied to the hydrofoil proportional to the decreasing buoyancy, which in turn implies that the string can be further loaded by the pulley which is connected to an energy utilizing device. The load that the energy utilizing device can apply to the pulley corresponds to the additional work created by the wheel when the velocity is kept constant.

Examples

The lift or down force gives the following force in Newton (N):

$$Z = \frac{r_{ho}}{2} U^2 C_t S$$

$C_t$ = lift coefficient
$S$ = Area of hydrofoil
$R_{ho}$ = Liquid
$U$ = Velocity

The parameters involved in calculating the lift coefficient are shown in Fig. 5.

$c$ = length of chord
$f$ = camber
$t$ = thickness
$k$ = line of camber
$LE$ = leading edge
$TE$ = trailing edge

1) The lift coefficient is given by the expression:

$$C_t = \frac{Z}{\frac{r_{ho}}{2} U^2 S}$$

2) And the lift coefficient is given by the expression

$$Ct = \frac{K_\varphi \left(\frac{\partial C_t}{\partial \alpha}\right)(\alpha + \alpha_0 - \Delta\alpha_0)}{1 + \left(\frac{\partial C_t}{\partial \alpha}\right)\left(\frac{K_\varphi}{\pi L}\right)(1+\tau)E}$$

3) The lift coefficient relative to the angle of attack is given by the expression:

$$\left(\frac{\partial C_t}{\partial \alpha}\right) = 5.5\alpha_0 = 1.74 f$$

4) The effect on the surface is given by the expression:

$$k_\varphi = 1 - (0.5 + c)\exp[-2(h)^{0.6}]$$

5) Zero angle correction is given by the expression:

$$\Delta\alpha_0 = \frac{c}{2}\left(\frac{1}{k_\varphi} - 1\right)$$

6) Drag caused by resistance and lift induced drag is expressed by:

$$\tau = 0.09\sqrt{L} - 0.04$$

7) Lambda and Dzetta is expressed by:

$$\delta\frac{h}{L} = 0.85 + \frac{0.16}{\sqrt{\frac{h}{L}}}$$

8) Under the conditions:

$$0.02 < \frac{h}{l} < 1.0$$

The hydrofoil is immersed in a flow of liquid for the purpose of being put to continuous movement, while simultaneously carrying a load, preferably air. The force, either as a down force or a lift, can be shown by the following example:

$S$ = 1000 m$^2$
$C_t$ = 1.33
$U$ = 1.7 m/s (symmetrical foil)

We obtain a lift/down force

$$Z = \frac{1000}{2}1.7^2 * 1.4 * 1000 = 2,023,000 N$$

Here it appears that a large force may be achieved, even if the flow of liquid is not larger than 1.7 m/s or 3.3 knots. An ocean current like the Gulf Stream will give 6.73 knots, but in the following examples we use 1.7 m/s for conservative reasons. A hydrofoil with the above exemplary profile and area may have the following volume:

$V = A * L = 22,5m^2 * 100\ m = 2250m^3$
$A$ = Area
$L$ = Length

In order to convert this force to energy, a load is provided, preferably air, and preferably the air volume within the foil or cylinders or similar devices carried by or within the hydrofoil. The buoyancy corresponds to the mass of displaced fluid according to Archimedes' principle:

$$\frac{\rho_O}{\rho_f} = \frac{weight}{weight - weight\ immersed}$$

$\rho_o$ = density of object
$\rho_f$ = density of fluid

Net buoyancy is given by:

$$F_{net} = mg - \rho V g$$

$m$ = mass
$g$ = acceleration of gravity
$p$ = density
$V$ = volume

In order to obtain the submersion disclosed herein, we deduce:

$$Z > F_{net}$$

which gives:

$$\frac{r_{ho}}{2} U^2 C_t S > mg - \rho V g$$

In order to pull down 1 m³ air with a velocity of one meter per second, for example, the force must exceed 10 000 Newton. In the aforementioned theoretical example, it is possible to pull down 202 m³ air. As the air is compressed as a consequence of the increasingly deeper levels in which it is located, the volume and hence the load decreases, whereby an increased velocity is achieved. In other words, we obtain compressed air, which in turn is potential energy. Once the foil with its air cargo has reached a predetermined depth, the angle of attack on the foil is altered, and return towards the surface. The air will then have a pressure expressed by Boyle's law:

$$p_1 V_1 = p_2 V_2$$

As mentioned, the air reduces its volume during submersion, and will keep the pressure when rising by a mechanical lock-in or a bag being pushed into a mechanical device. This may e.g. be accomplished in that the cylinders or room containing the air have end walls which may be moved inwards by the ambient pressure. At the same time, these end walls are locked in position once the volume reaches a certain size and the hydrofoil has reached a predetermined depth. The locking may be performed by spring loaded bushings and gaskets or the like. A piston-like device may be used, wherein one or both end walls of the hydrofoil approaches each other as the air volume decreases. Such a device is within present prior art for common design of mechanical devices, and is hence not described any further. The reduced air volume is replaced by, for example, water displacing the air during submersion. The water enters the hydrofoil through openings. See the detailed description of figure 1 below.

When the foil arrives at the surface or a predetermined depth, it is advantageously docked in a frame, where couplings for pipes/conduits ensure that the pressurized air is transferred to storage tanks for further transport. The frame structure can alternatively be localized under water in order to avoid obstacles to sailing traffic. Present technology for offshore oil activities can perform all these operations in shallow waters, unloading to a ship by a connection in the hull under water.

Performing the unloading of the pressurized air will depend on the actual topographical conditions and the distance from the shore.

By using air as load, one goes directly from kinetic energy to pressurized air, a potential energy which in turn is an excellent energy carrier. The most frequently used present energy carriers are: petroleum, batteries, hydrogen and wood. Pressurized air is also a good energy carrier, but little used. Pressurized air has become more actualized as technology on carbon flasks/pressurized containers that can replace metal, which reduces the weight considerably. Most present machinery can be driven by pressurized air. There are, for example, cars working adequately on pressurized air as fuel (cf. www.theaircar.com).

The energy acquired in this manner depends on the variables: Area, speed and mass, which is transformed to pressurized air. The amount of energy in the pressurized air is proportional to the depth to which the air is submerged. The amount of energy (work) in the pressurized air is expressed by:

$$W = P_0 V_0 \left( \left( \log_n \frac{P_0}{P_a} \right) - 1 \right) + P_a V_0$$

$P_0$ = pressure in the tank
$V_0$ = the volume
$P_a$ = pressure of the atmosphere

As described above, the Gulf Stream retains its velocity all the way down to a depth of 800 meters. For example, the potential energy per 1 m³ air at 300 meters depth, using the above formula, would be:

3.98 KWh

The amount of energy per hour depends on the velocity of the cycle submersion/surfacing and hence the time in which a cycle can be completed. With an average velocity of 1 m/s:

$$T = \frac{(2h)/U}{3600}$$

h = depth, meters
U = velocity (m/s)
T = (300 x 2) / 1)/3 600 = 0.1666667 hours.

This gives $Nbr = \dfrac{1}{0.166667} = 6,0$ cycles of submerging/surfacing per hour, giving the following work per hour: 3.98 x 6,0 = 23,88kwh per m³ air, which in turn gives 216MWh/year/m³.

Example: Area:

Prior art methods are based on blades/propellers rotating as a consequence of a liquid flow and/or liquid pressure (as a subsea windmill). This limits the size of the area that can be utilized due to mechanical loads, *infer alia* on shafts and propeller supports. This limits the opportunities for catching the energy in a cost effective manner.

Advantages of the invention:

A very large hydrofoil area can be disposed in the flow of liquid without the serious problems of torque about shafts, loose elements etc. The liquid in which the hydrofoil is immersed is naturally supportive. Hence, by the present invention, the area can be substantially increased compared to a rotating solution.

Example: Moving parts:

Prior art methods commonly utilize a rotating element that in turn drives a generator or the like. Such mechanical solutions cause major wear on the moving parts.

Advantages of the invention:

The hydrofoil has no rotating elements or corresponding shafts and few movable parts. It is not subject to equal mechanical challenges as in presently known technology. The simplicity also implies that the investments are reduced, and hence increases the possibility for producing renewable energy less expensive, which would give a gain in the environment balance.

Example: Yield and energy conversion:

Known methods transmit power in the liquid flow via rotating equipment and generators. When electricity is provided via rotating motion and force, the energy must once more be converted to some form of energy carrier, e.g. a battery or hydrogen in order to move a car. This implies a substantial energy loss and reduced yield.
A typical windmill presently has an effect of 2 MW (nominal). The yield of a windmill is calculated by:

$$W = \omega_0 \omega_1 \omega_2$$

At a particularly suitable location with much wind, an uptime of about 70% ($\omega_0$) and a wind velocity of 60% ($\omega_1$) of nominal value can be expected as an annual average.
In addition comes the yield on conversion to a given energy carrier. This will vary depending on the chosen energy carrier, but will under no circumstances exceed 60% ($\omega_2$), which yields:

$$W = 0.7 * 0.6 * 0.6 = 0.252.$$

Advantage of the invention:

The energy is transferred to an energy carrier, air, in one step, and hence will produce a far better yield. Loss when generating pressurized air, occurs in the form of heat transmission. As approximately unlimited cooling capacity is available from the surrounding sea, the compression will be substantially isothermic, with minimal heat loss.

**Claims**

**1.** Method for converting kinetic energy in a flow of liquid, wherein a foil (1) is disposed in the flow of liquid such that the foil (1) can be moved cyclically in directions (12, 13) perpendicular to the flow of liquid between an uppermost level (h1) and a lowermost level (d1) depending on the lift of the foil (1), **characterized by**

- confining a compressible fluid in a pressure tank (100) connected to the foil (1) at a first pressure when the foil (1) is at the uppermost level (h1),
- controlling the lift of the foil (1) such that the foil (1) is subjected to a force in a downward direction,
- allowing the compressible fluid to compress due to ambient pressure as long as the foil (1) is moving downwards,
- confining the compressed fluid in the pressure tank (100) at a second pressure when the foil (1) is at the lowermost level (d1)
- controlling the lift of the foil (1) such that the foil (1) is subjected to a force in an upward direction,
- preventing the compressible fluid from expanding while the foil (1) is moving in an upward direction, and
- removing the potential energy of the compressed fluid from the pressure tank (100) when the foil (1) is at the uppermost level (h1).

2. Method according to claim 1, **characterized in that** the compressible fluid is air, and that the potential energy is removed as pressurized air for further transport and sale.

3. Method according to claim 1, **characterized by** removing the potential energy from the foil (1) by connecting the second pressure to the inlet of a turbine connected to an electric generator (24) at the surface.

4. Method according to claim 1, **characterized in that** the cyclic movement is used to drive a pulley (25) connected to a rotor in a stator in an electric generator at the surface.

5. Apparatus for converting kinetic energy in a flow of liquid, wherein a foil (1) is disposed in the flow of liquid such that the foil (1) can be moved in directions (12, 13) perpendicular to the flow of liquid between an uppermost level (h1) and a lowermost level (d1), controlling means (14, 15, 23) for controlling the lift of the foil in the directions (12, 13) perpendicular to the direction of the flow of liquid, **characterized in that** the foil (1) is attached to a pressure tank (100) comprising an inlet for compressible fluid, at least one valve (120) adapted to prevent or allow a fluid flow through the inlet, a piston (110) adapted to move inward in the pressure tank (110) as the ambient pressure increases, and means to lock the piston in an inner position (102).

6. Apparatus according to claim 5, **characterized in that** the compressible fluid is air, and that the apparatus further comprises means (120, 121) to convey pressurized air from the foil (1).

7. Apparatus according to claim 5, **characterized in that** the foil (1) is further connected by wire to a pulley (25) driving a rotor in a stator in an electric generator (24) at the surface.

8. Apparatus for converting kinetic energy from a flow of liquid to pressurised air where the hydrofoil (1) can be moved in directions (12, 13) perpendicular to the flow of liquid comprising:

- a hydrofoil (1) including movable end walls (9) which may be moved inwards by ambient pressure, an air volume (7) is disposed within the hydrofoil (1);
- controlling means (14, 15, 23) for controlling the lift of the foil in the directions (12, 13) perpendicular to the direction of the flow of liquid,
- a mechanical device for locking the walls (9), which means that the compressed pressure in the air is kept.

9. Apparatus according to claim 5, where the mechanical device may be provided by spring loaded bushings and gaskets.

10. Apparatus according to claim 5, where the hydrofoil (1) includes means for connecting couplings for pipes/conduits to ensure that the pressurised air is transferred to storage tanks for further transport.

**Patentansprüche**

1. Verfahren zum Umwandeln von kinetischer Energie in einem Flüssigkeitsstrom, wobei ein Foil (1) so in dem Flüssigkeitsstrom angeordnet ist, dass das Foil (1) zyklisch in Richtungen (12, 13) lotrecht zum Flüssigkeitsstrom zwischen einer geringsten Tiefe (h1) und einer größten Tiefe (d1) je nach dem Hub des Foil (1) bewegt werden kann, **gekennzeichnet durch**:

- Verdichten eines komprimierbaren Fluids in einem mit dem Foil (1) verbundenen Drucktank (100) mit einem ersten Druck, wenn sich das Foil (1) in der geringsten Tiefe (h1) befindet,
- Regeln des Hubs des Foil (1), so dass das Foil (1) einer Kraft in einer Abwärtsrichtung ausgesetzt wird,

- Komprimierenlassen des komprimierbaren Fluids durch Umgebungsdruck, solange sich das Foil (1) abwärts bewegt,
- Verdichten des komprimierten Fluids im Drucktank (100) mit einem zweiten Druck, wenn sich das Foil (1) in der größten Tiefe (d1) befindet,
- Regeln des Hubs des Foil (1), so dass das Foil (1) einer Kraft in einer Aufwärtsrichtung ausgesetzt wird,
- Verhindern einer Expansion des komprimierbaren Fluids, während sich das Foil (1) in einer Aufwärtsrichtung bewegt, und
- Abnehmen der potentiellen Energie des komprimierten Fluids von dem Drucktank (100), wenn sich das Foil (1) in der geringsten Tiefe (h1) befindet.

2. Verfahren nach Anspruch 1, **dadurch gekennzeichnet, dass** das komprimierbare Fluid Luft ist und die potentielle Energie als Druckluft für Weitertransport und Verkauf abgenommen wird.

3. Verfahren nach Anspruch 1, **gekennzeichnet durch** Abnehmen der potentiellen Energie vom Foil (1) **durch** Koppeln des zweiten Drucks mit dem Einlass einer mit einem Stromgenerator (24) an der Oberfläche verbundenen Turbine.

4. Verfahren nach Anspruch 1, **dadurch gekennzeichnet, dass** die zyklische Bewegung zum Antreiben einer Scheibe (25) benutzt wird, die mit einem Rotor in einem Stator in einem Stromgenerator an der Oberfläche verbunden ist.

5. Vorrichtung zum Umwandeln von kinetischer Energie in einem Flüssigkeitsstrom, wobei ein Foil (1) in dem Flüssigkeitsstrom angeordnet ist, so dass das Foil (1) in Richtungen (12, 13) lotrecht zum Flüssigkeitsstrom zwischen einer geringsten Tiefe (h1) und einer größten Tiefe (d1) bewegt werden kann, Regelmittel (14, 15, 23) zum Regeln des Hubs des Foil in den Richtungen (12, 13) lotrecht zur Richtung des Flüssigkeitsstroms, wobei das Foil (1) an einem Drucktank (100) angebracht ist, der einen Einlass für komprimierbares Fluid aufweist, **dadurch gekennzeichnet, dass** sie Folgendes umfasst: wenigstens ein Ventil (120) zum Verhindern oder Zulassen eines Fluidstroms durch den Einlass, einen Kolben (110) zum Einwärtsbewegen im Drucktank (100), während der Umgebungsdruck zunimmt, und Mittel zum Verriegeln des Kolbens in einer Innenposition (102).

6. Vorrichtung nach Anspruch 5, **dadurch gekennzeichnet, dass** das komprimierbare Fluid Luft ist und dass die Vorrichtung ferner Mittel (120, 121) zum Übertragen von Druckluft von dem Foil (1) umfasst.

7. Vorrichtung nach Anspruch 5, **dadurch gekennzeichnet, dass** das Foil (1) ferner per Draht mit einer Scheibe (25) verbunden ist, die einen Rotor in einem Stator in einem Stromgenerator (24) an der Oberfläche antreibt.

8. Vorrichtung zum Umwandeln von kinetischer Energie von einem Flüssigkeitsstrom in Druckluft, wobei das Hydrofoil (1) in Richtungen (12, 13) lotrecht zum Flüssigkeitsstrom bewegt werden kann, **dadurch gekennzeichnet, dass** sie Folgendes umfasst:

- ein Hydrofoil (1) mit beweglichen Endwänden (9), die durch Umgebungsdruck einwärts bewegt werden können, wobei sich ein Luftvolumen (7) im Hydrofoil (1) befindet;
- Regelmittel (14, 15, 23) zum Regeln des Hubs des Foil in den Richtungen (12, 13) lotrecht zur Richtung des Flüssigkeitsstroms,
- eine mechanische Vorrichtung zum Verriegeln der Wände (9), was bedeutet, dass der komprimierte Druck in der Luft gehalten wird.

9. Vorrichtung nach Anspruch 5, wobei die mechanische Vorrichtung durch federgespannte Buchsen und Dichtungen bereitgestellt wird.

10. Vorrichtung nach Anspruch 5, wobei das Hydrofoil (1) Mittel zum Verbinden von Kupplungen für Rohre/Rohrleitungen beinhaltet, um zu gewährleisten, dass die Druckluft zu Speichertanks für den Weitertransport übertragen wird.

**Revendications**

1. Procédé pour convertir de l'énergie cinétique dans un écoulement de liquide, un plan (1) étant disposé dans l'écoulement de liquide de telle sorte que le plan (1) peut être déplacé de manière cyclique dans des directions (12, 13) perpendiculaires à l'écoulement de liquide entre un niveau extrême supérieur (h1) et un niveau extrême inférieur (d1) en fonction de la portance du plan (1), **caractérisé par** :

- le confinement d'un fluide compressible dans un réservoir sous pression (100) relié au plan (1) à une première pression lorsque le plan (1) est au niveau extrême supérieur (h1),
- la commande de la portance du plan (1) de telle sorte que le plan (1) est soumis à une force dans une direction descendante,
- l'autorisation pour le fluide compressible d'être comprimé en raison de la pression ambiante tant que le plan (1) se déplace vers le bas,
- le confinement du fluide comprimé dans le réservoir sous pression (100) à une seconde pression lorsque le plan (1) est au niveau extrême inférieur (d1),

- la commande de la portance du plan (1) de telle sorte que le plan (1) est soumis à une force dans une direction ascendante,

- l'interdiction pour le fluide compressible de se détendre lorsque le plan (1) se déplace dans une direction ascendante, et

- le retrait de l'énergie potentielle du fluide comprimé à partir du réservoir sous pression (100) lorsque le plan (1) est au niveau extrême supérieur (h1).

2. Procédé selon la revendication 1, **caractérisé par le fait que** le fluide compressible est de l'air et que l'énergie potentielle est retirée sous forme d'air mis sous pression pour transport et vente ultérieurs.

3. Procédé selon la revendication 1, **caractérisé par** le retrait de l'énergie potentielle à partir du plan (1) par liaison de la seconde pression à l'entrée d'une turbine reliée à une génératrice électrique (24) au niveau de la surface.

4. Procédé selon la revendication 1, **caractérisé par le fait que** le mouvement cyclique est utilisé pour entraîner une poulie (25) reliée à un rotor dans un stator dans une génératrice électrique au niveau de la surface.

5. Appareil pour convertir de l'énergie cinétique dans un écoulement de liquide, un plan (1) étant disposé dans l'écoulement de liquide de telle sorte que le plan (1) peut être déplacé dans des directions (12, 13) perpendiculaires à l'écoulement de liquide entre un niveau extrême supérieur (h1) et un niveau extrême inférieur (d1), des moyens de commande (14, 15, 23) pour commander la portance du plan dans les directions (12, 13) perpendiculaires à la direction de l'écoulement de liquide, le plan (1) étant fixé à un réservoir sous pression (100) comprenant une entrée pour du fluide compressible, **caractérisé par le fait qu'**il a au moins une soupape (120) apte à empêcher ou autoriser un écoulement de fluide à travers l'entrée, un piston (110) apte à se déplacer vers l'intérieur dans le réservoir sous pression (100) à mesure que la pression ambiante augmente, et des moyens pour bloquer le piston dans une position intérieure (102).

6. Appareil selon la revendication 5, **caractérisé par le fait que** le fluide compressible est de l'air et que l'appareil comprend en outre des moyens (120, 121) pour transporter l'air mis sous pression à partir du plan (1).

7. Appareil selon la revendication 5, **caractérisé par le fait que** le plan (1) est en outre relié par câble à une poulie (25) entraînant un rotor dans un stator dans une génératrice électrique (24) au niveau de la surface.

8. Appareil pour convertir de l'énergie cinétique à partir d'un écoulement de liquide en de l'air mis sous pression, dans lequel le plan hydrodynamique (1) peut être déplacé dans des directions (12, 13) perpendiculaires à l'écoulement de liquide, **caractérisé par le fait qu'**il comprend :

- un plan hydrodynamique (1) comprenant des parois d'extrémité mobiles (9) qui peuvent être déplacées vers l'intérieur par la pression ambiante, un volume d'air (7) étant disposé à l'intérieur du plan hydrodynamique (1),
- des moyens de commande (14, 15, 23) pour commander la portance du plan dans les directions (12, 13) perpendiculaires à la direction de l'écoulement de liquide,
- un dispositif mécanique pour bloquer les parois (9), ce qui signifie que la pression comprimée dans l'air est conservée.

9. Appareil selon la revendication 5, dans lequel le dispositif mécanique peut être formé par des douilles et joints à ressort.

10. Appareil selon la revendication 5, dans lequel le plan hydrodynamique (1) comprend des moyens pour relier des raccords pour tuyaux/conduites pour garantir que l'air mis sous pression est transféré à des réservoirs de stockage pour transport ultérieur.

Fig. 1
Hydrofoil Air Power

Fig. 2
Hydrofoil Air Power

Fig. 3
Hydrofoil Air Power

Fig. 4
Hydrofoll Air Power

Fig. 5

120    103    102    100    101

110

*Fig. 6a*

120    103    102    100    101

110

*Fig. 6b*

121    103    102    100    101

120    110

*Fig. 6c*

**EP 2 480 785 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NO 326942
- US 6273680 B
- WO 9421914 A2
- US 2007040389 A